# EUROPÄISCHE PATENTSCHRIFT

(11) **EP 0 400 361 B1**
(45) Veröffentlichungstag und Bekanntmachung des Hinweises auf die Patenterteilung: **09.07.1997**
(21) Anmeldenummer: 90108636.3
(22) Anmeldetag: 08.05.1990
(51) Int. Cl.: C08B 31/12

(54) **Verfahren zur Herstellung einer viskositätsregulierten kationischen Stärke**
Process for preparation of a cationic starch with controlled viscosity
Procédé pour la préparation d'un amidon cationique à viscosité réglable

(30) Priorität: 31.05.1989 DE 3917632
(43) Veröffentlichungstag der Anmeldung: 05.12.1990
(73) Patentinhaber: Degussa Aktiengesellschaft, 60311 Frankfurt (DE)
(72) Erfinder: Fischer, Wolfgang, D-8756 Kahl (DE); Bischoff, Dietmar, D-8713 Marktbreit (DE); Huss, Michael, D-6236 Eschborn (DE); Stober, Reinhard, Dr., D-6467 Hasselroth 2 (DE); Rössler, Gert, Dr., D-5040 Brühl (DE)

(56) Entgegenhaltungen:
- EP-A- 0 303 039
- US-A- 4 373 099
- CHEMICAL ABSTRACTS, Band 97, Nr. 6, 9. August 1982, Seite 83, Zusammenfassung Nr. 40505c, Columbus, Ohio, US; O. SLAMA et al.: "Kinetics of organic polymer degradation in solution induced by peroxo compounds" & PR. VYZK. USTAVU GEOL. INZ. 1981, 37, 121-41

## Beschreibung

Die Erfindung betrifft ein Verfahren zur Herstellung pulverförmiger, kationische Stärke enthaltender Mischungen, welche zu viskositätsregulierten Stärkekleistern verkochbar sind. Viskositätsreguliert bedeutet in diesem Zusammenhang, daß die Stärken chemisch oder thermisch/chemisch in unterschiedlichem Ausmaß abgebaut sind und daher die Viskosität der unter Verwendung solcher Stärken hergestellten wässrigen Suspensionen nach den durch den Anwendungszweck gegebenen Notwendigkeiten eingestellt werden kann.

In der EP-A-0 004 774 wird ein Verfahren zur Herstellung kationischer Stärkepasten beschrieben, die bei der Papierherstellung verwendet werden, bei dem man eine Stärkeaufschlämmung erst mit Ammoniumpersulfat thermisch/chemisch umsetzt und dann mit Natriumhydroxid und 3-Chlor-2-hydroxypropyltrimethylammoniumchlorid kationisiert.

Die Reaktionsprodukte müssen anschließend direkt weiterverarbeitet werden, da eine Lagerung nicht möglich ist.

Aufgabe der Erfindung ist ein Verfahren bei dem man vorreagierte Stärken in pulverförmigem Zustand herstellt, die ohne Zusatz weiterer Chemikalien (außer Wasser) an dem gewünschten Ort, insbesondere z. B. einer Papierfabrik, zu der viskositätsregulierten Stärke verarbeitet werden kann.

Gegenstand der Erfindung ist ein Verfahren zur Herstellung pulverförmiger, kationische Stärke enthaltender Mischungen, welche zu viskositätsregulierten Stärkeätherkleistern verkochbar sind, bei dem man Stärke
(1) mit einem Alkylenepoxid der allgemeinen Formel 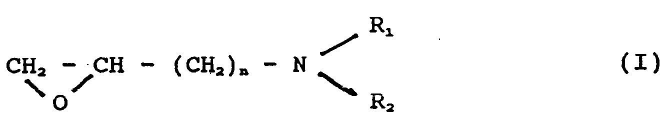 oder vorzugsweise 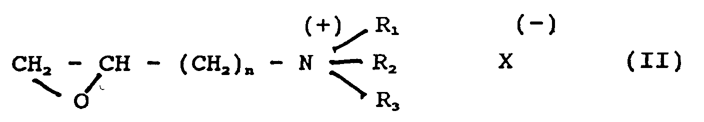 in der n = 1, 2 oder 3 ist, R₁, R₂ und R₃ gleiche oder verschiedene Alkylreste mit 1 bis 4 Kohlenstoffatomen oder R₁ den Benzylrest, -CH₂CH₂OH oder -C₁₂H₂₅ darstellen, und X⁽⁻⁾ Chlorid, Bromid, Sulfat, Sulfamat oder Acetat bedeutet, bzw. den entsprechenden Chlorhydrinen,
   wobei man je Mol Stärke, berechnet als Anhydroglukoseeinheit in der Trockensubstanz, 0,005 bis 0,5 Mol der Epoxide gemäß den Formeln (I) oder (II) einsetzt,
   in Gegenwart von, bezogen auf die Gesamtmenge der Mischung,
(2) 10 bis 35 Gew.-% Wasser,
(3) 0,01 bis 2,0 Gew.-% einer(s) feinteiligen Kieselsäure und/oder Silikats,
(4) 0,2 bis 2,0 Gew.-% eines Alkali- oder Erdalkalihydroxids bzw. -oxids, Alkali- oder Erdalkalimetasilikats oder eines alkalisch wirkenden Aluminats oder eines Gemischs dieser Substanzen,
   wobei der aus den Komponenten (3) und (4) bestehende Aktivator in einer Menge vorliegt, die so beschaffen ist, daß der pH-Wert der kationisierten Stärke bei ≥ 8 (5 gew.-%ige Suspension) liegt, und wobei der Aktivator zu 1 bis 50 Gew.-% aus der Komponente (3) besteht,
   und
(5) 0,01 bis 4,0 Gew.-%, bezogen auf atro Stärke, eines Salzes einer oder mindestens zweier Persauerstoffverbindungen
   mischt und diese Mischung in einem Intensivmischer innerhalb von 20 sec bis 25 min bei 18 bis 30°C homogenisiert.

Die Mischung der Reaktanten wird dann ausgeschleust, in das vorgesehene Lagerbehältnis wie z.B. Silo ausgetragen und bevorzugt bei 5 bis 40 °C gelagert.

Dies stellt die eigentlich bevorzugte Ausführungsform dar, die erstmals die Handhabung der Chemikalien z. B. in der Stärkefabrik beläßt, dem Anwender der Stärke z. B. in der Papierfabrik dagegen ein gebrauchsfertiges Produkt zur Verfügung stellt, ohne daß er sich in einem erneuten Arbeitsschritt um die Dosierung und Handhabung von Chemikalien kümmern muß.
Zwischen Abpacken der Mischung und Verkochen zu einem Stärkekleister können durchaus mehrere Wochen liegen.

Es erweist sich als vorteilhaft, daß man bevorzugt in einem Temperaturbereich arbeitet, in dem sich in Abhängigkeit von z. B. jahreszeitlich bedingten Schwankungen der Umgebungstemperatur die Raumtemperatur von anspruchslosen Warenlagern bewegt, d. h. von 18 bis 30 °C , insbesondere 20 bis 25 °C.

Versuche zeigen, daß das eingesetzte Epoxid, unbeeinflußt von der Gegenwart der Persauerstoffverbindungen, vollständig abreagiert. Bei einer Temperatur von 20 °C sind z. B. nach 7 Tagen nur noch Spuren von < 10 ppm Epoxid/kg Stärke festzustellen.

Nach dem erfindungsgemäßen Verfahren hergestellte Stärken besitzen keinen Grobanteil und können ohne Nachbehandlung (Absieben) eingesetzt werden.

Auch nach mehrwöchiger Lagerung ändern sich die Stärkeeigenschaften nicht in der Weise, daß man abweichende Viskositäten der Stärkekleister in Abhängigkeit von der Lagerdauer erwarten müßte.

Zur Herstellung kationischer Stärkeäther nach dem erfindungsgemäßen Verfahren können native oder modifizierte Stärke oder Stärke enthaltende Substanzen beliebiger Herkunft eingesetzt werden. Mit besonderem Vorteil werden native Weizen-, Mais-, Tapioca-, Kartoffel-, Gerstenstärke oder deren Gemische verwendet.

Die Verbindungen gemäß den Formeln (I) und (II) werden auch in Form der entsprechenden Chlorhydrine unter Zusatz der zur Umwandlung zum Epoxid notwendigen Menge Alkali verwendet. Spätestens im Reaktionsmedium erfolgt dann die Umwandlung zu den Epoxiden entsprechend der Formel (I) oder (II), die mit der Stärke reagieren.

Man setzt je Mol Stärke, berechnet als Anhydroglukoseeinheit in der Trockensubstanz, 0,005 bis 0,500 Mol Epoxid gemäß den Formeln (I) oder (II), vorzugsweise 0,01 bis 0,03 Mol Epoxid, ein. Daraus resultiert ein Substitutionsgrad (DS) von 0,005 bis 0,300, bevorzugt von 0,01 bis 0,03.

Erfindungsgemäß wird die Verätherung der Stärke mit den Alkylidenepoxiden in einem Medium vorgenommen, das 10 bis 35 Gew.-%, insbesondere 20 bis 25 Gew.-%, Wasser und 0,2 bis 2,0 Gew.-%, insbesondere 0,4 bis 1,5 Gew.-% eines Alkali- oder Erdalkalihydroxids bzw. -oxids, insbesondere Calciumoxid oder Calciumhydroxid, Alkali- oder Erdalkalimetasilikats, insbesondere Natriummetasilikat oder Natriumaluminats oder eines Gemisches dieser Substanzen enthält.

Neben diesen an sich bekannten Komponenten gibt man im allgemeinen 0,01 bis 2,0 Gew.-%, bevorzugt 0,1 bis 0,5 Gew.-%, einer(s) feinteiligen Kieselsäure und oder Silikats dem Reaktionsgemisch zu, bezogen auf dessen Gesamtmenge.

Dabei kann es sich um gefällte oder durch Flammenhydrolyse erzeugte Kieselsäuren handeln, hydrophil oder hydrophob.

Die spezifischen Oberflächen liegen zwischen 60 und 700 m²/g, bevorzugt 100 und 450 m²/g (BET-Messung) nach DIN 66 131, N₂-Adsorption bei der Temperatur des flüssigen Stickstoffs, vorheriges Ausheizen der Probe bei 110 °C.

Bevorzugt eingesetzt werden hydrophile gefällte Kieselsäuren mit einer spezifischen Oberfläche von 190 bis 450 m²/g, insbesondere eine sprühgetrocknete gefällte Kieselsäure mit einer spezifischen Oberfläche von 190 m²/g (BET-Messung).

Man verwendet auch Gemische aus hydrophoben und hydrophilen Kieselsäuren.

Unter den verwendbaren Silikaten sind zu verstehen, z. B. Aluminiumsilikate,z. B. P 820 (Degussa) (BET-Oberfläche: 110 m²/g), Natriumsilikate, z. B. Silteg®AS7, (BET-Oberfläche: 60 m²/g)

Man setzt vorzugsweise ein pulverförmiges Gemisch aus Kieselsäure und/oder Silikaten und dem alkalisch wirkenden Oxid oder Hydroxid, besonders Calciumhydroxid oder Calciumoxid oder Natriummetasilikat oder eine Mischung dieser Verbindungen ein (im folgenden Texte Aktivator genannt).
Der Aktivator enthält 1 bis 50 Gew.-%, bevorzugt bis 10 Gew.-%, Kieselsäure und/oder Silikate. Die Differenz zu 100 % wird durch den alkalisch wirkenden Bestandteil aufgefüllt.

Der Aktivator muß nicht in Pulverform vorliegen. In geeigneten Fällen setzt man auch wässrige Natronlauge als alkalischen Bestandteil ein.

Dabei ist jedoch zu berücksichtigen, daß jeweils die Menge an Aktivator eingesetzt wird, die am Endprodukt einen pH-Wert ≥8 (5 Gew.%ige Stärkesuspension) zeigt.

Als Persauerstoffverbindungen werden insbesondere verwendet:
Natriumperoxodisulfat, Na₂S₂O₈
Kaliumperoxodisulfat, K₂S₂O₈
Natriumperoxocarbonat, Na₂C₂O₆
Kalimperoxocarbonat, K₂C₂O₆
Ammoniumperoxodisulfat, (NH₄)₂S₂O₈
Kaliummonopersulfat (Caroat), 2KHSO₅ · KHSO₄ · K₂SO₄
einzeln oder im Gemisch miteinander.

Insbesondere werden Gemische aus Natriumperoxodisulfat und Natriumperoxocarbonat in einem Gewichtsverhältnis von 1 : 1 bis 1 : 10, bevorzugt von 1 : 2 bis 1 : 4 eingesetzt. Mit solchen Kombinationen erhält man beim Verkochen weiße Kleister bei einem gleichzeitig mengenmäßig relativ geringen Einsatz von Persauerstoffverbindungen. Weiße Kleister entstehen zwar auch bei alleiniger Verwendung von Percarbonat, aber unter Einsatz erheblich größerer Mengen, wenn man diesselbe niedrige Viskosität erzielen will.

Die Persauerstoffverbindungen setzt man in einer Menge von 0,01 bis 4,0 Gew.-%, insbesondere 0,1 bis 1,0 Gew.-%, bezogen auf atro Stärke, zu.

Man verwendet sie in Form von Pulvern oder wässrigen Lösungen. In welcher Reihenfolge dieses Reagenz und die weiteren Reagentien der Stärke zugesetzt werden, beeinflußt das erfindungsgemäße Verfahren nicht.

Als Intensivmischer geeignet sind z. B. Pflugscharmischer (kontinuierlich und diskontinuierlich), Befeuchtungs-Durchflußmischer (kontinuierlich).

Als vorteilhaft hat sich jedoch herausgestellt, (Chargenmischer) zuerst Stärke, Aktivator und Persauerstoffverbindung miteinander bis zu 10 Minuten vorzumischen, anschließend das Epoxid z. B. in Form wässriger Lösungen aufzusprühen und dann zu homogenisieren.

### Beispiele

**Tabelle 1**

| Folgende Aktivator-Typen werden für die Kationisierungsreaktion verwendet | |
|---|---|
| Type | Zusammensetzung (Gew.-%) |
| A-1 | 96,2 % Calciumhydroxid, 97-%ig |
| | 3,8 % Kieselsäure, hydophil, sprühgetrocknet spez. Oberfl.: 190 m²/g (BET) |
| A-2 | 32,5 % Calciumhydroxid, 97-%ig |
| | 65,0 % Natriummetasilikat |
| | 2,5 % Kieselsäure,hydrophil, sprühgetrocknet spez. Oberfl.: 190 m²/g (BET) |

In den Beispielen 1 - 6 werden verschiedene Stärketypen mit Standard-Aktivatoren nach dem Trockenverfahren kationisiert. Den Abmischungen werden hierbei unterschiedliche Mengen Natriumperoxodisulfat zugegeben. Nach 3 Tagen Reaktionszeit bei 20 °C werden sowohl die Reaktionsausbeuten der Kationisierungsreaktion als auch der Abbau der Stärken gemessen.

### Beispiel 1

50 kg (0,2633 kMol) native Kartoffelstärke (Wassergehalt 14,6 %) werden in einen Mischer gegeben. Nach der Zugabe von 0,171 kg Aktivator A-1 wird 5 Minuten gemischt und innerhalb von 5 Minuten werden 4,604 kg Reagenzlösung, welche 0,426 kg 2,3-Epoxypropyltrimethylammoniumchlorid (0,00281) kMol) enthält, über eine Düse bei laufendem Mischer zudosiert. Es wird weitere 10 Minuten gemischt und in ein Vorratssilo eingefüllt. Nach einer Standzeit von 3 Tagen wurde bei der Kationisierungsreaktion eine Ausbeute von 93,8 % analysiert. Der Substitutionsgrad der kationisierten Stärke betrug 0,010. Der Stärkegehalt lag bei 78,6 %. Nach der Verkochung eines 25 Gew.-%igen Stärkeslurries (pH 10,8) bei 6,5 bar und 130 °C wurde der Stärkekleister auf 7 Gew.-% verdünnt und die Viskosität nach Brookfield bei 100 UpM gemessen: 80 °C = 870 mPas (Spindel RV3), 50 °C = 1880 mPas (Spindel RV4).

### Beispiel 1 a

Es wurde wie in Beispiel 1 verfahren, jedoch zusätzlich 0,10 % Natriumperoxodisulfat, bezogen auf atro Stärke, zugemischt. Die Ausbeute bei der Kationisierungsreaktion betrug 95 %. Die Viskosität eines 7 Gew.-%igen Stärkekleisters betrug: 80 0°C = 100 mPas (Spindel RV2), 50 °C = 152 mPas (Spindel RV2).

### Beispiel 1 b

Es wurde wie in Beispiel 1 verfahren, jedoch zusätzlich 0,30 % Natriumperoxodisulfat, bezogen auf atro Stärke, zugemischt. Die Ausbeute bei der Kationsierungsreaktion betrug 95 %. Die Viskosität eines 7 Gew.-%igen Stärkekleisters betrug: 80 °C = 36 mPas (Spindel RV1), 50 °C = 56 mPas (Spindel RV1).

### Beispiel 1 c

Es wurde wie in Beispiel 1 verfahren, jedoch zusätzlich 0,50 % Natriumperoxodisulfat,bezogen auf atro Stärke, zugemischt. Die Ausbeute bei der Kationisierungsreaktion betrug 95 ,4 %. Die Viskosität eines 7 Gew.-%igen Stärkekleisters betrug: 80 °C = 25 mPas (Spindel RV1), 50 °C = 29 mPas (Spindel RV1).

### Beispiel 2

Es wurde wie in Beispiel 1 verfahren, jedoch 0,256 kg Aktivator A-2 bezogen auf atro Stärke, zugemischt.
Die Ausbeute bei der Kationisierungsreaktion betrug 85,4 %. Die Viskosität eines 7 Gew.-%igen Stärkekleisters betrug: 80 °C = 1160 mPas (Spindel RV4), 50 °C = 2640 mPas (Spindel RV5).

### Beispiel 2 a

Es wurde wie in Beispiel 2 verfahren, jedoch zusätzlich 0,30 % Natriumperoxodisulfat, bezogen auf atro Stärke, zugemischt. Die Ausbeute bei der Kationisierungsreaktion betrug 88,3 %. Die Viskosität eines 7 Gew.-%igen Stärkekleisters betrug 80 °C = 41 mPas (Spindel RV1), 50 °C = 55 mPas (Spindel RV1).

### Beispiel 3

50 kg (0,2723 kMol) native Weizenstärke (Wassergehalt 11,7 %) werden in einen Mischer gegeben. Nach der Zugabe von 0,287 kg Aktivator A-1 wird 5 Minuten gemischt und innerhalb 5 Minuten 3,743 kg Reagenzlösung, welche 0,450 kg 2,3-Epoxypropyltrimethylammoniumchlorid (0,00297 kMol) enthält, über eine Düse bei laufendem Mischer zudosiert. Es wird weitere 10 Minuten gemischt und in ein Vorratssilo eingefüllt. Nach einer Standzeit von 3 Tagen wurde bei der Kationisierungsreaktion eine Ausbeute von 91,7 % analysiert. Der Substitutionsgrad der kationisierten Stärke betrug 0,010.
Der Stärkegehalt lag bei 82,5 %. Nach der Verkochung eines 25 Gew.-%igen Stärkeslurries (pH 11,2) bei 6,5 bar und 130 °C wurde der Stärkekleister auf 7 Gew.-% verdünnt und die Viskosität nach Brookfield bei 100 UpM gemessen: 80 °C = 181 mPas (Spindel RV2), 50 °C = 502 mPas (Spindel RV3).

### Beispiel 3 a

Es wurde wie in Beispiel 3 verfahren, jedoch zusätzlich 0,10 % Natriumperoxodisulfat, bezogen auf atro Stärke, zugemischt. Die Ausbeute bei der Kationisierungsreaktion betrug 91,8 %. Die Viskosität eines 7 Gew.-%igen Stärkekleisters betrug: 80 °C = 80 mPas (Spindel RV1), 50 °C = 122 mPas (Spindel RV2).

### Beispiel 3 b

Es wurde wie in Beispiel 3 verfahren, jedoch zusätzlich 0,30 % Natriumperoxodisulfat,bezogen auf atro Stärke, zugemischt. Die Ausbeute bei der Kationisierungsreaktion betrug 92,7 %. Die Viskosität eines 7 Gew.-%igen Stärkekleisters betrug: 80 °C = 40 mPas (Spindel RV2), 50°C = 60 mPas (Spindel RV3).

### Beispiel 3 c

Es wurde wie in Beispiel 3 verfahren, jedoch zusätzlich 0,50 % Natriumperoxodisulfat,bezogen auf atro Stärke, zugemischt. Die Ausbeute bei der Kationisierungsreaktion betrug 92,7 %. Die Viskosität eines 7 Gew.-%igen Stärkekleisters betrug: 80 °C = 26 mPas (Spindel RV1), 50 °C = 37 mPas (Spindel RV1).

### Beispiel 4

Es wurde wie in Beispiel 3 verfahren, jedoch 0,442 kg Aktivator A2, bezogen auf atro Stärke, zugemischt. Die Ausbeute bei der Kationisierungsreaktion betrug 90,9 %. Die Viskosität eines 7 Gew.-%igen Stärkekleisters betrug: 80 °C = 251 mPas (Spindel RV2), 50 °C = 642 mPas (Spindel RV3).

### Beispiel 4 a

Es wurde wie in Beispiel 4 verfahren, jedoch zusätzlich 0,30 % Natriumperoxodisulfat, bezogen auf atro Stärke, zugemischt. Die Ausbeute bei der Kationisierungsreaktion betrug 92,4 %. Die Viskosität eines 7 Gew.-%igen Stärkekleisters betrug: 80 °C = 36 mPas (Spindel RV1), 50°C = 54 mPas (Spindel RV1).

### Beispiel 5

50 kg (0,2677 kMol) native Maisstärke (Wassergehalt 13,2 %) werden in einen Mischer gegeben. Nach der Zugabe von 0,326 kg Aktivator A-1 wird 5 Minuten gemischt und innerhalb 5 Minuten 2,862 kg Reagenzlösung, welche 0,467 kg 2,3-Epoxypropyltrimethylammoniumchlorid (0,00308 kMol) enthält, über eine Düse bei laufendem Mischer zudosiert. Es wird weitere 10 Minuten gemischt und in ein Vorratssio eingefüllt. Nach einer Standzeit von 3 Tagen wurde bei der Kationisierungsreaktion eine Ausbeute von 87,0 % analysiert. Der Substitutionsgrad der kationisierten Stärke betrug 0,010. Der Stärkegehalt lag bei 82,4 %. Nach der Verkochung eines 25 Gew.%igen Stärkeslurries (pH 11,4) bei 6,5 bar und 130 °C wurde der Stärkekleister auf 7 Gew.-% verdünnt und die Viskosität nach Brookfield bei 100 UpM gemssen: 80 °C = 184 mPas (Spindel RV2), 50 ° C = 470 mPas (Spindel RV3).

### Beispiel 5 a

Es wurde wie in Beispiel 5 verfahren, jedoch zusätzlich 0,10 % Natriumperoxodisulfat, bezogen auf atro Stärke, zugemischt. Die Ausbeute bei der Kationisierungsreaktion betrug 88,1 %. Die Viskosität eines 7 Gew.-%igen Stärkekleisters betrug: 80 °C = 80 mPas (Spindel RV1), 50 °C = 126 mPas (Spindel RV2).

### Beispiel 5 b

Es wurde wie in Beispiel 5 verfahren, jedoch zusätzlich 0,30 % Natriumperoxodisulfat, bezogen äuf atro Stärke, zugemischt. Die Ausbeute bei der Kationisierungsreaktion betrug 88,8 %. Die Viskosität eines 7 Gew.-%igen Stärkekleisters betrug: 80 °C = 40 mPas (Spindel RV1), 50°C = 58 mPas (Spindel RV1).

### Beispiel 5 c

Es wurde wie in Beispiel 5 verfahren, jedoch zusätzlich 0,50 % Natriumperoxodisulfat,bezogen auf atro Stärke, zugemischt. Die Ausbeute bei der Kationisierungsreaktion betrug 90,1 %. Die Viskosität eines 7 Gew.-%igen Stärkekleisters betrug: 80 °C = 28 mPas (Spindel RV1), 50 °C = 38 mPas (Spindel RV1).

### Beispiel 6

Es wurde wie in Beispiel 5 verfahren, jedoch 0,499 kg Aktivator A-2, bezogen auf atro Stärke, zugemischt. Die Ausbeute bei der Kationisierungsreaktion betrug 85,4 %. Die Viskosität eines 7 Gew.-%igen Stärkekleisters betrug: 80 °C = 202 mPas (Spindel RV2), 50 °C = 480 mPas (Spindel RV3).

### Beispiel 6 a

Es wurde wie in Beispiel 6 verfahren, jedoch zusätzlich 0,30 % Natriumperoxodisulfat, bezogen auf atro Stärke, zugemischt. Die Ausbeute bei der Kationisierungsreaktion betrug 87,2 %. Die Viskosität eines 7 Gew.-%igen Stärkekleisters betrug: 80 °C = 42 mPas (Spindel RV1), 50°C = 64 mPas (Spindel RV1)

### Beispiel 7

Es wurde wie in Beispiel 1 verfahren, jedoch zusätzlich 2,0 % Kaliummonopersulfat (Caroat), bezogen auf atro Stärke, zugemischt. Die Ausbeute bei der Kationisierungsreaktion betrug 94,3 %. Die Viskosität eines 7 Gew.-%igen Stärkekleisters betrug: 80 °C = 29 mPas (Spindel RV1), 50 °C = 41 mPas (Spindel RV1).

### Beispiel 8

Es wurde wie in Beispiel 1 verfahren, jedoch zusätzlich 2,0 % Natriumperoxocarbonat, bezogen auf atro Stärke, zugemischt. Die Ausbeute bei der Kationisierungsreaktion betrug 94,7 %. Die Viskosität eines 7 Gew.-%igen Stärkekleisters betrug: 80 °C = 31 mPas, 50 °C = 42 mPas (Spindel RV1). Der sich bildende Kleister ist weiß.

### Beispiel 9

Es wurde wie in Beispiel 1 verfahren, jedoch zusätzlich 0,8 % eines Gemisches aus 75 Gew.-% Natriumperoxocarbonat und 25 Gew.-% Natriumperoxodisulfat, bezogen auf atro Stärke, zugemischt. Die Ausbeute bei der Kationisierungsreaktion betrug 94,2 %. Die Viskosität eines 7 Gew.-%igen Stärkekleisters betrug: 80 °C = 27 mPas (Spindel RV1), 50 °C = 40 mPas (Spindel RV1). Der sich bildende Kleister ist weiß.

## Patentansprüche

1. Verfahren zur Herstellung pulverförmiger, kationische Stärke enthaltender Mischungen, welche zu viskositätsregulierten Stärkeätherkleistern verkochbar sind, bei dem man Stärke
(1) mit einem Alkylenepoxid der allgemeinen Formel 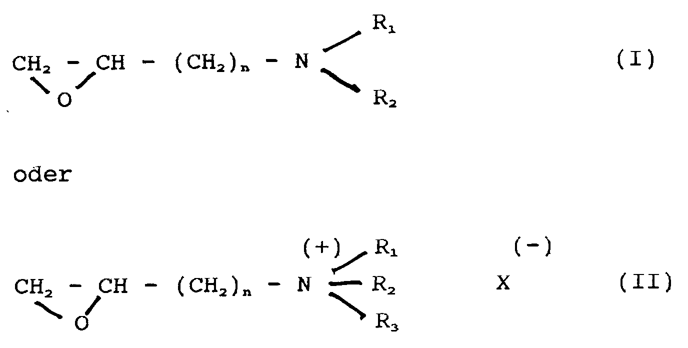 in der n = 1, 2 oder 3 ist, R₁, R₂ und R₃ gleiche oder verschiedene Alkylreste mit 1 bis 4 Kohlenstoffatomen oder R₁ den Benzylrest, -CH₂CH₂OH oder -C₁₂H₂₅ darstellen, und X⁽⁻⁾ Chlorid, Bromid, Sulfat, Sulfamat oder Acetat bedeutet, bzw. den entsprechenden Chlorhydrinen,
wobei man je Mol Stärke, berechnet als Anhydroglukoseeinheit in der Trockensubstanz, 0,005 bis 0,5 Mol der Epoxide gemäß den Formeln (I) oder (II) einsetzt,
in Gegenwart von, bezogen auf die Gesamtmenge der Mischung,
(2) 10 bis 35 Gew.-% Wasser,
(3) 0,01 bis 2,0 Gew.-% einer(s) feinteiligen Kieselsäure und/oder Silikats,
(4) 0,2 bis 2,0 Gew.-% eines Alkali- oder Erdalkalihydroxids bzw. -oxids, Alkali- oder Erdalkalimetasilikats oder eines alkalisch wirkenden Aluminats oder eines Gemischs dieser Substanzen,
wobei der aus den Komponenten (3) und (4) bestehende Aktivator in einer Menge vorliegt, die so beschaffen ist, daß der pH-wert der kationisierten Stärke bei ≥ 8 (5 gew.-%ige Suspension) liegt, und wobei der Aktivator zu 1 bis 50 Gew.-% aus der Komponente (3) besteht,
und
(5) 0,01 bis 4,0 Gew.-%, bezogen auf atro Stärke, eines Salzes einer oder mindestens zweier Persauerstoffverbindungen
mischt und diese Mischung in einem Intensivmischer innerhalb von 20 sec bis 25 min bei 18 bis 30°C homogenisiert.

2. Verfahren gemäß Anspruch 1
dadurch gekennzeichnet, daß man als Persauerstoffverbindungen
Natriumperoxodisulfat, Na₂S₂O₈
Kaliumperoxidisulfat, K₂S₂O₈
Natriumperoxocarbonat, Na₂C₂O₆
Kaliumperoxocarbonat, K₂C₂O₆
Ammoniumperoxodisulfat, (NH₄)₂S₂O₈
Kaliummonopersulfat (Caroat®),2KHSO₅ KHSO₄ K₂SO₄
einzeln oder im Gemisch einsetzt.

3. Verfahren gemäß Anspruch 2,
dadurch gekennzeichnet, daß man Natriumperoxodisulfat und Natriumperoxocarbonat in einem Gewichtsverhältnis von 1:1 bis 1:10 einsetzt.

4. Verfahren gemäß einem oder mehreren der Ansprüche 1 bis 3,
dadurch gekennzeichnet, daß man zuerst Stärke, Aktivator und Persauerstoffverbindung miteinander mischt, anschließend das Epoxid in Form einer wäßrigen Lösung aufsprüht und dann homogenisiert.

5. Verfahren gemäß einem oder mehreren der Ansprüche 1 bis 4,
dadurch gekennzeichnet, daß man als Intensivmischer einen Pflugscharmischer benutzt.

6. Verfahren gemäß einem oder mehreren der Ansprüche 1 bis 4,
dadurch gekennzeichnet, daß man als Intensivmischer einen Durchflußbefeuchtungsmischer benutzt.

7. Verwendung der pulverförmigen Mischungen hergestellt gemäß einem oder mehreren der Ansprüche 1 bis 6 zur Herstellung eines kationischen Stärkekleisters.

## Claims

1. A method of producing pulverulent cationic starch-containing mixtures adapted to be boiled to obtain adjustable-viscosity starch ether paste, wherein starch is mixed
(i) with an alkylene epoxide having the general formula 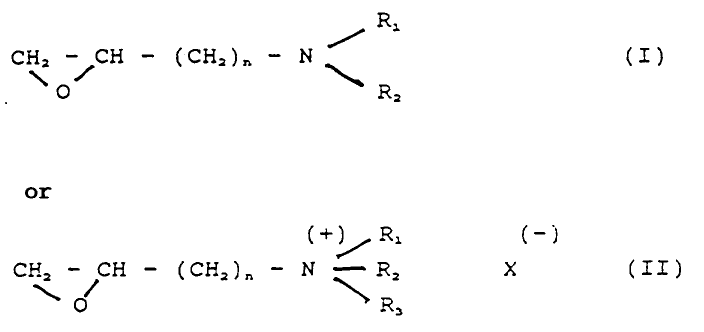 in which n = 1, 2, or 3, R₁, R₂ and R₃ denote the same or different alkyl radicals having 1 to 4 carbon atoms or R₁ denotes a benzyl radical or -CH₂CH₂-OH or -C₁₂H₂₅ and X⁽⁻⁾ denotes chloride or bromide or sulphate or sulphamate or acetate or the corresponding chlorohydrins,
wherein 0,005 to 0.5 mol of the epoxides according to formula (I) or (II) are used per mol starch, calculated as anhydroglucose units in the dry substance,
in the presence of the following, relative to the total quantity of mixture:
(2) 10 to 35 wt.% water,
(3) 0.01 to 2.0 wt.% of a finely-divided silica and/or silicate,
(4) 0.2 to 2.0 wt.% of an alkali-metal or alkaline earth-metal hydroxide or oxide or an alkali-metal or alkaline earth metal metasilicate or an alkaline aluminate or a mixture of these substances,
wherein the activator consisting of components (3) and (4) is present in a quantity such that the pH of the cationised starch is ≥ 8 (5 wt.% suspension), and wherein the activator comprises 1 to 50 wt.% of component (3), and
(5) 0,01 to 4.0 wt.%, relative to abs. dry starch, of a salt of one or at least two peroxo compounds, and the mixture is homogenised in an intimate mixer at 18 to 30°C and for 20 seconds to 25 min.

2. A method according to claim 1, characterised in that the peroxo compounds used are
Sodium peroxodisulphate, Na₂S₂O₈
Potassium peroxodisulphate, K₂S₂O₈
Sodium peroxocarbonate, Na₂C₂O₆
Potassium peroxocarbonate, K₂C₂O₆
Ammonium peroxodisulphate, (NH₄)₂S₂O₈
Potassium monopersulphate (caroate®), 2KHSO₅KHSO₄K₂SO₄
individually or in a mixture.

3. A method according to claim 2, characterised in that sodium peroxodisulphate and sodium peroxocarbonate are used in a ratio by weight of 1 : 1 to 1 : 10.

4. A method according to one or more of claims 1 to 3, characterised in that starch, the activator and the peroxo compound are first mixed together, after which the epoxide is sprayed on in the form of an aqueous solution and then homogenised.

5. A method according to one or more of claims 1 to 4, characterised in that the intimate mixer used is a ploughshare mixer.

6. A method according to one or more of claims 1 to 4, characterised in that the intimate mixer used is a flow moistening mixer.

7. Use of the pulverulent mixtures produced according to one or more of claims 1 to 6 for producing a cationic starch paste.

## Revendications

1. Procédé de préparation de mélanges pulvérulents contenant de l'amidon cationique, qui peuvent être cuits pour former des colles d'éthers d'amidon à viscosité réglable, procédé dans lequel on mélange de l'amidon
(1) avec un époxyde d'alkylène de formule générale : 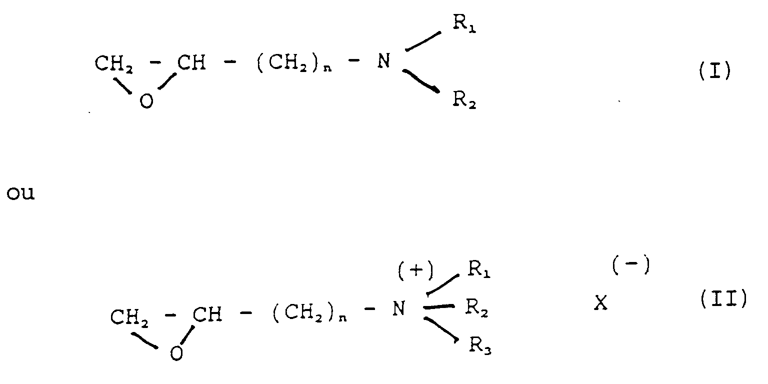 dans laquelle n=1, 2 ou 3, R₁, R₂ et R₃ représentent des radicaux alkyle identiques ou différents ayant 1 à 4 atomes de carbone ou R₁ représente le radical benzyle, -CH₂CH₂OH ou -C₁₂H₂₅, et X⁽⁻⁾ désigne un chlorure, un bromure, un sulfate, un sulfamate ou un acétate, ou avec les chlorhydrines correspondantes, en utilisant par mole d'amidon, calculée comme unité d'anhydroglucose dans la substance sèche, 0,005 à 0,5 mole de l'époxyde selon les formules (I) ou (II),
en présence, par rapport à la quantité totale du mélange,
(2) de 10 à 35 % en poids d'eau,
(3) de 0,01 à 2,0 % en poids d'un acide silicique et/ou d'un silicate finement divisé(s),
(4) de 0,2 à 2,0 % en poids d'un hydroxyde ou d'un oxyde de métal alcalin ou alcalino-terreux, d'un silicate de métal alcalin ou alcalino-terreux, ou d'un aluminate à effet alcalin, ou d'un mélange de ces substances,
l'activateur constitué des composants (3) et (4) étant présent en quantité qui soit telle que la valeur du pH de l'amidon cationisé se situe à une valeur supérieure ou égale à 8 (suspension à 5 % en poids), et l'activateur étant constitué du composant (3) à raison de 1 à 50 % en poids,
et
(5) de 0,01 à 4,0 % en poids, par rapport à l'atro amidon, d'un sel d'un ou au moins deux composés peroxygénés,
et on homogénéise ce mélange dans un mélangeur intensif sur une période de 20 s à 25 mn à une température de 18 à 30°C.

2. Procédé selon la revendication 1, caractérisé en ce qu'on utilise comme composés peroxygénés :
le peroxodisulfate de sodium, Na₂S₂O₈,
le peroxydisulfate de potassium, K₂S₂O₈,
le peroxocarbonate de sodium, Na₂C₂O₆,
le peroxocarbonate de potassium K₂C₂O₆,
le peroxodisulfate d'ammonium (NH₄)₂S₂O₈
le monopersulfate de potassium (Caroat®), 2KHSO₅, KHSO₄, K₂SO₄, seuls ou en mélange.

3. Procédé selon la revendication 2,
caractérisé en ce qu'on utilise le peroxodisulfate de sodium et le peroxocarbonate de sodium dans un rapport pondéral de 1:1 à 1:10.

4. Procédé selon l'une quelconque ou plusieurs des revendications 1 à 3,
caractérisé en ce qu'on mélange tout d'abord ensemble l'amidon, l'activateur et le composé peroxygéné, ensuite on pulvérise l'époxyde sous la forme d'une solution aqueuse et on homogénéise.

5. Procédé selon l'une quelconque ou plusieurs des revendications 1 à 4, caractérisé en ce qu'on utilise comme mélangeur intensif un mélangeur à soc.

6. Procédé selon l'une quelconque ou plusieurs des revendications 1 à 4, caractérisé en ce qu'on utilise comme mélangeur intensif un mélangeur humide à circulation.

7. Utilisation des mélanges pulvérulents préparés selon l'une quelconque ou plusieurs des revendications 1 à 6 pour la préparation de colles d'amidon cationiques.
